# EUROPÄISCHE PATENTSCHRIFT

(11) **EP 3 128 198 B1**
(45) Veröffentlichungstag und Bekanntmachung des Hinweises auf die Patenterteilung: **13.06.2018**
(21) Anmeldenummer: 16001653.1
(22) Anmeldetag: 27.07.2016
(51) Int. Cl.: F16D 48/02

(54) **HYDRAULIKZYLINDER, INSBESONDERE NEHMERZYLINDER FÜR EINE HYDRAULISCHE KUPPLUNGSBETÄTIGUNG FÜR KRAFTFAHRZEUGE**
HYDRAULIC CYLINDER, IN PARTICULAR SLAVE CYLINDER FOR HYDRAULIC CLUTCH ACTUATION FOR MOTOR VEHICLES
VERIN HYDRAULIQUE, EN PARTICULIER CYLINDRE RECEPTEUR POUR UNE COMMANDE D'EMBRAYAGE HYDRAULIQUE DE VEHICULE AUTOMOBILE

(30) Priorität: 07.08.2015 DE 102015010054
(43) Veröffentlichungstag der Anmeldung: 08.02.2017
(73) Patentinhaber: FTE automotive GmbH, 96106 Ebern (DE)
(72) Erfinder: Ryba, Jürgen, D-96182 Reckendorf (DE)
(74) Vertreter: Oppermann, Mark

(56) Entgegenhaltungen:
- EP-A2- 1 666 752
- DE-A1-102011 081 900
- DE-A1-102012 214 124

## Beschreibung

### TECHNISCHES GEBIET

Die vorliegende Erfindung bezieht sich auf einen Hydraulikzylinder gemäß dem Oberbegriff des Patentanspruchs 1. Insbesondere bezieht sich die Erfindung auf einen Nehmerzylinder für eine hydraulische Kupplungsbetätigung für Kraftfahrzeuge, wie sie massenweise in der Automobilindustrie zum Einsatz kommen.

### STAND DER TECHNIK

Eine herkömmliche hydraulische Kupplungsbetätigung für Kraftfahrzeuge hat einen Geberzylinder, der an einen mit Hydraulikflüssigkeit gefüllten Ausgleichsbehälter angeschlossen ist. Der Geberzylinder weist ein Zylindergehäuse auf, in dessen Gehäusebohrung ein Kolben längsverschieblich aufgenommen ist. Der Geberzylinderkolben begrenzt in der Gehäusebohrung des Zylindergehäuses eine Druckkammer und kann mittels eines Kupplungspedals oder eines elektromotorischen Antriebs mechanisch mit einer Betätigungskraft beaufschlagt werden. Die Druckkammer des Geberzylinders ist über eine Druckleitung mit einer Druckkammer eines Nehmerzylinders hydraulisch verbunden, so dass der durch Niedertreten des Kupplungspedals oder elektromotorische Verschiebung des Geberzylinderkolbens in der Druckkammer des Geberzylinders erzeugte Druck über die Flüssigkeitssäule in der Druckleitung auf die Druckkammer des Nehmerzylinders übertragbar ist. Der Nehmerzylinder weist ebenfalls ein Zylindergehäuse mit einer Gehäusebohrung auf, in der ein die Druckkammer des Nehmerzylinders begrenzender und somit mit dem im Geberzylinder erzeugten Druck beaufschlagbarer Kolben längsverschieblich aufgenommen ist. Dem Nehmerzylinderkolben ist eine Kolbenstange zugeordnet, die an einem Kupplungshebel angreift, welcher seinerseits mit dem Ausrücklager der Kupplung in Wirkverbindung steht. Im Ergebnis kann das Ausrücklager der Kupplung über den Nehmerzylinderkolben mit einer Betätigungskraft beaufschlagt werden, um über einen Ausrückmechanismus die Kupplungsdruckplatte von der Kupplungsmitnehmerscheibe und somit den Motor vom Getriebe des Kraftfahrzeugs zu trennen.

Üblicherweise besitzt der Nehmerzylinder ein Federelement, welches dazu dient, den Nehmerzylinderkolben in einer von einem Boden des Zylindergehäuses weggewandten Richtung vorzuspannen, um das kolbenstangenseitige Ende des Nehmerzylinders in dessen montierten Zustand in Anlage an einer zugeordneten Aufnahme am Kupplungshebel zu halten und eine Vorlast auf das Ausrücklager aufzubringen. Bei vorbekannten Lösungen ist dieses Federelement vornehmlich als Schraubendruckfeder ausgebildet. Dabei ist das Federelement in einer ersten Alternative im Druckraum angeordnet - siehe z.B. die Druckschrift EP 1 512 882 A2 (Fig. 1) - wo es sich auf einer Seite am Boden des Zylindergehäuses und auf der anderen Seite über einen Federteller am Kolben abstützt. In einer zweiten Alternative hingegen umgibt das Federelement auf der vom Druckraum abgewandten Seite des Kolbens - siehe etwa die den Oberbegriff des Patentanspruchs 1 bildende Druckschrift EP 1 666 752 A2 (Fig. 1) - die Kolbenstange und liegt auf seiner kolbenfernen Seite an einem Ringbund der Kolbenstange an, während es sich auf seiner kolbennahen Seite über einen Federteller am Zylindergehäuse abstützt.

Letztere Alternative ist insofern vorteilhaft, als nicht die Gefahr besteht, dass das Federelement die Zylindergehäusewand im Bereich der Dichtungslauffläche berührt und ggf. beschädigt. Außerdem ist bei dieser Alternative des Nehmerzylinders die Selbstentlüftung besser, sowohl bei der Erstbefüllung als auch im Betrieb des Nehmerzylinders, weil kein Federelement im Druckraum vorhanden ist, an dem sich Luftblasen festsetzen könnten. Schließlich dient bei dieser Alternative das Federelement vorteilhaft auch zur Geradstellung der Kolbenstange gegenüber dem Zylindergehäuse, was die Montage des Nehmerzylinders vereinfacht.

Insbesondere im Zusammenhang mit hydraulischen Kupplungsbetätigungen, die als aus Geberzylinder, Ausgleichsbehälter, Druckleitung und Nehmerzylinder vormontierte und mit Hydraulikflüssigkeit vorbefüllte Einheit an das Montageband des Kraftfahrzeugherstellers geliefert werden, wurden im obigen Stand der Technik ferner Maßnahmen vorgeschlagen, um die Kolbenstange des Nehmerzylinders bezüglich des Zylindergehäuses des Nehmerzylinders zur Vermeidung einer Überbefüllung der hydraulischen Kupplungsbetätigung, für den Transport derselben sowie zur Vereinfachung der Montage der Einheit im Kraftfahrzeug temporär zu fesseln.

So weist der Nehmerzylinder gemäß der gattungsbildenden Druckschrift EP 1 666 752 A2 einen Fixierabschnitt auf, der die den Kolben und die Kolbenstange umfassende Kolbenbaugruppe vor einer ersten Betätigung des Nehmerzylinders in einer vorbestimmten Hubstellung bezüglich des Zylindergehäuses gegen die Kraft des Federelements fixiert und dazu ausgebildet ist, mit der ersten Betätigung des Nehmerzylinders die Kolbenbaugruppe gegenüber dem Zylindergehäuse freizugeben. Der Fixierabschnitt ist bei diesem Stand der Technik im Druckraum am Gehäuseboden vorgesehen und wirkt zur lösbaren Fixierung der Kolbenbaugruppe bezüglich des Zylindergehäuses mit einem Gegenelement am Kolben zusammen. Genauer gesagt ist der Fixierabschnitt an einem Einsatzteil ausgebildet, das in einem am Gehäuseboden vorgesehenen Druckanschluss des Nehmerzylinders eingesetzt ist, während ein druckraumseitiger Kolbenfortsatz das Gegenelement am Kolben bildet, welches an dem Fixierabschnitt des Einsatzteils formschlüssig verrastet werden kann.

Zwar ist diese Anordnung des Fixierabschnitts im Druckraum am Gehäuseboden des Zylindergehäuses insofern vorteilhaft, als das vom Kolben abgewandte Ende der Kolbenstange zur problemlosen Anbringung einer Gleitpfanne, Staubschutzkappe od.dgl. frei bleibt, der Fixierabschnitt eine Winkelbewegung der Kolbenstange bezüglich der Mittelachse des Zylindergehäuses nicht behindern und hier unerwünschte Reibgeräusche nicht verursachen kann. Für die Unterbringung des Fixierabschnitts wird im Druckraum des vorbekannten Nehmerzylinders allerdings ein zusätzlicher Bauraum benötigt, der den Nehmerzylinder bei einem vorgegebenen Hub verlängert, was für bestimmte, beengte Einbausituationen unerwünscht sein kann.

Schließlich offenbart die Druckschrift DE 10 2012 214 124 A1 einen Nehmerzylinder für eine Kupplungsausrückvorrichtung zur Betätigung einer Kupplung in einem Kraftfahrzeug, mit einem Gehäuse, in dem ein Kolben axial verschieblich gelagert ist, an dem eine Kolbenstange angreift, die von einer sich in einer umlaufenden Nut des Gehäuses abstützenden Vorspannfeder umgeben und mittels dieser aus dem Gehäuse heraus vorgespannt ist. Bei diesem Stand der Technik ist im Inneren des Gehäuses ein erstes Halteelement in der Form eines in einer umlaufenden Gehäusenut aufgenommenen Anschlagrings angeordnet, während an der Kolbenstange wenigstens ein weiteres Halteelement in der Form einer umlaufenden Nut vorgesehen ist, wobei die Halteelemente dazu ausgebildet sind, die Kolbenstange in einem Montagezustand des Nehmerzylinders axial unverschieblich zu halten und bei einer ersten Betätigung des Nehmerzylinders axial freizugeben. Genauer gesagt besitzt der Nehmerzylinder einen O-Ring, der mit dem Halteelement (Nut) an der Kolbenstange in Eingriff gebracht werden kann, während das gehäuseseitige Halteelement (Anschlagring) in Wirkverbindung mit dem O-Ring den Kolben in seiner axialen Bewegung begrenzt. Mit der ersten Betätigung des Nehmerzylinders wird der O-Ring von dem Halteelement (Nut) an der Kolbenstange zu einer Vertiefung an der Kolbenstange verlagert, wo der O-Ring im Folgenden verbleibt, so dass der Kolben bzw. die Kolbenstange nun ungehindert in axialer Richtung im Nehmerzylinder bewegt werden kann.

### AUFGABENSTELLUNG

Der Erfindung liegt dem oben geschilderten Stand der Technik gegenüber die Aufgabe zugrunde, einen möglichst einfach ausgebildeten Hydraulikzylinder, insbesondere Nehmerzylinder für eine hydraulische Kupplungsbetätigung für Kraftfahrzeuge zu schaffen, bei dem die Kolbenbaugruppe gegenüber dem Zylindergehäuse vor Erstbetätigung des Hydraulikzylinders in vorbestimmter Hubstellung fixiert und mit Erstbetätigung des Hydraulikzylinders freigegeben werden kann, ohne dass die Maßnahmen für die temporäre Fixierung der Kolbenbaugruppe einen zusätzlichen Bauraum beanspruchen.

### DARSTELLUNG DER ERFINDUNG

Diese Aufgabe wird durch die im Patentanspruch 1 angegebenen Merkmale gelöst. Vorteilhafte bzw. zweckmäßige Weiterbildungen der Erfindung sind Gegenstand der Patentansprüche 2 bis 15.

Bei einem Hydraulikzylinder, insbesondere Nehmerzylinder für eine hydraulische Kupplungsbetätigung für Kraftfahrzeuge, mit einer einen Kolben und eine Kolbenstange aufweisenden Kolbenbaugruppe, einem Zylindergehäuse, in dem ein Druckraum vorgesehen ist, der auf der einen Seite variabel von dem Kolben und auf der anderen Seite fest von einem Boden des Zylindergehäuses begrenzt ist, einem auf der vom Druckraum abgewandten Seite des Kolbens angeordneten Federelement, welches sich einerseits an einem gehäuseseitigen Federteller abstützt und andererseits mit der Kolbenstange wirkverbunden ist, um die Kolbenbaugruppe in einer vom Boden des Zylindergehäuses weggewandten Richtung vorzuspannen, und einem Fixierabschnitt, der die Kolbenbaugruppe vor einer ersten Betätigung des Hydraulikzylinders in einer vorbestimmten Hubstellung bezüglich des Zylindergehäuses fixiert und dazu ausgebildet ist, mit der ersten Betätigung des Hydraulikzylinders die Kolbenbaugruppe gegenüber dem Zylindergehäuse freizugeben; ist erfindungsgemäß der Fixierabschnitt am Federteller ausgebildet und wirkt zur lösbaren Fixierung der Kolbenbaugruppe bezüglich des Zylindergehäuses mit einem Gegenabschnitt an der Kolbenstange zusammen.

Nach dem Grundgedanken der Erfindung ist also kein zusätzliches, einen weiteren Bauraum beanspruchendes Bauteil vorgesehen, um den Fixierabschnitt auszubilden. Vielmehr wird hierfür vorteilhaft ein ohnehin vorhandenes Bauteil, nämlich der Federteller genutzt, an/in dem - einer einfachen und kostengünstigen Ausgestaltung mit wenigen Teilen förderlich - als weitere Funktion die lösbare Fixierung der Kolbenbaugruppe gegenüber dem Zylindergehäuse integriert ist. Nachdem der am/im Federteller integrierte Fixierabschnitt mit dem zugeordneten Gegenabschnitt an der - bei der hier in Rede stehenden Zylinderbauform bezüglich des druckraumfernen Federelements zwingend radial innen liegenden - Kolbenstange zusammenwirkt, kann für die temporäre Fesselung der Kolbenbaugruppe gegenüber dem Zylindergehäuse in vorteilhafter Weise der Bauraum genutzt werden, der ohnehin für das Federelement vorgesehen ist. Mit anderen Worten gesagt ist der nach radial außen vom Federelement und nach radial innen von der Kolbenstange begrenzte Ringraum nutzbar, um in sehr kompakter und kurzer Ausgestaltung des Hydraulikzylinders den Fixierabschnitt am Federteller und den Gegenabschnitt an der Kolbenstange aufzunehmen.

Ein weiterer Vorteil der erfindungsgemäßen Ausbildung des Fixierabschnitts am Federteller besteht darin, dass gegenüber anderen vorbekannten Lösungen mit temporärer Fixierung der Kolbenbaugruppe gegenüber dem Zylindergehäuse auf der vom Druckraum abgewandten, Kolbenstangenseite des Kolbens, wie sie etwa in der vorerwähnten Druckschrift EP 1 512 882 A2 offenbart werden, der Fixierabschnitt mit/nach der Erstbetätigung des Hydraulikzylinders nicht in axialer Richtung des Hydraulikzylinders "wandert", sondern am Federteller in einer in axialer Richtung des Hydraulikzylinders gesehen festen Position verbleibt. Somit ist es z.B. für Reparaturzwecke oder auch nach einem unbeabsichtigten "Auslösen" der temporären Fesselung etwa beim Transport des Hydraulikzylinders grundsätzlich möglich, den Gegenabschnitt an der Kolbenstange am Fixierabschnitt des ortsfesten Federtellers und damit die Kolbenbaugruppe gegenüber dem Zylindergehäuse wieder bzw. erneut zu fesseln.

Ein solcher multifunktionaler Federteller kann schließlich auch sehr kostengünstig in großen Stückzahlen durch Spritzgießen aus Kunststoff ausgebildet werden.

Grundsätzlich ist es möglich, zum Halten bzw. Zentrieren des Federelements gegenüber dem Zylindergehäuse den Federteller mit z.B. einem Ringvorsprung zu versehen, der am kolbennahen Ende des Federelements stirnseitig in das Federelement eingreift. Im Hinblick auf eine sichere Aufnahme des Federelements bei wiederum kurzer Bauweise bevorzugt ist es indes, wenn der Federteller durch ein Ringteil ausgebildet ist, mit einem Innenringabschnitt, durch den sich die Kolbenstange hindurch erstreckt, einem Außenringabschnitt, über den der Federteller am Zylindergehäuse befestigt ist, einem Bodenabschnitt, der den Innenringabschnitt und den Außenringabschnitt verbindet, sowie einer zwischen den vorgenannten Abschnitten begrenzten Ringaussparung zur Aufnahme des kolbennahen Endes des Federelements.

Vorzugsweise weist der Innenringabschnitt hierbei an seinem freien Ende innenumfangsseitig einen den Fixierabschnitt des Federtellers ausbildenden, geringfügig radial auffederbaren Ringwulst auf, während die Kolbenstange einen Kolbenstangenkopf hat, der außenumfangsseitig mit einem den Gegenabschnitt an der Kolbenstange ausbildenden, im Querschnitt gesehen im Wesentlichen balligen Ringbund versehen ist, der sich im fixierten Zustand der Kolbenbaugruppe an dem Ringwulst axial abstützt. Als Alternative hierzu ist prinzipiell zwar auch eine Ausgestaltung denkbar, bei der eine erhabene Struktur - z.B. eine umlaufende (oder mehrere über dem Umfang verteilte) Nase(n) - an dem einen Teil (Federteller oder Kolbenstangenkopf) mit einer Radialnut am jeweils anderen Teil eingreift, um für die temporäre Fesselung der Kolbenbaugruppe gegenüber dem Zylindergehäuse zu sorgen. Demgegenüber bevorzugt ist jedoch die vorbeschriebene, beidseitig erhabene, wulstartige bzw. ballige Ausgestaltung des Fixierabschnitts am Federteller und des Gegenabschnitts an der Kolbenstange, welche Ausgestaltung eine problemlose Überdrückung in zwei entgegengesetzten Richtungen ermöglicht (Lösen oder Fesseln) und somit insbesondere im Hinblick auf eine Wiederherstellung der vorübergehenden Fixierung der Kolbenbaugruppe bezüglich des Zylindergehäuses von Vorteil ist.

Um auf einfache Weise eine definierte Winkelbeweglichkeit der Kolbenstange gegenüber dem Zylindergehäuse zu gewährleisten, kann ferner der Innenringabschnitt auf bezüglich einer Mittelachse des Zylindergehäuses diametral gegenüberliegenden Seiten mit Aussparungen versehen sein, die im freigegebenen Zustand der Kolbenbaugruppe eine definierte Auslenkung der Kolbenstange gegenüber der Mittelachse des Zylindergehäuses gestatten. In Abhängigkeit vom Wirkdurchmesser des Hydraulikzylinders können die Aussparungen am Innenringabschnitt hierbei in Umfangsrichtung gesehen dessen Ringform unterbrechen (bei kleineren Wirkdurchmessern) oder aber nur radiale Vertiefungen im Innenringabschnitt bilden (bei größeren Wirkdurchmessern).

In einer besonders einfachen, insbesondere spitzgusstechnisch aus Kunststoff gut herstellbaren Ausgestaltung des vorbeschriebenen Federtellers kann weiterhin dessen Außenringabschnitt ausgehend von seinem freien Ende mit einer Mehrzahl von über dem Umfang verteilten, in Richtung des Bodenabschnitts verlaufenden axialen Schlitzen versehen sein, die den Außenringabschnitt in Segmente unterteilen, welche der Festlegung des Federtellers am Zylindergehäuse dienen. Vorzugsweise bildet hierbei wenigstens eines der Segmente einen Federarm, der an seinem freien Ende radial außen mit einem nasenartigen Vorsprung versehen ist, welcher mit einer am Innenumfang des Zylindergehäuses ausgebildeten Radialnut eingreift, um den Federteller in der Art einer Schnappverbindung am Zylindergehäuse in axialer Richtung zu sichern. Zwar wäre eine axiale Sicherung des Federtellers am Zylindergehäuse auch stoff- bzw. kraftschlüssig mittels einer Schweiß- oder Klebeverbindung wie auch auf andere Weise formschlüssig unter Zuhilfenahme eines separaten Sicherungselements - wie z.B. eines Drahtbügels oder eines Querriegels - denkbar; demgegenüber ist die vorbeschriebene Schnappverbindung jedoch montagetechnisch einfacher. Darüber hinaus kann wenigstens ein anderes der Segmente an seinem freien Ende einen radial nach außen und axial vorstehenden, teilzylindrischen Endabschnitt aufweisen, der mit einer komplementären Aussparung am Innenumfang des Zylindergehäuses eingreift, um den Federteller gegen ein Verdrehen im Zylindergehäuse zu sichern. So kann z.B. auf einfache, bei der Montage des Federtellers am Zylindergehäuse klare und eindeutige Weise für eine definierte Drehwinkelorientierung des Federtellers bezüglich des Zylindergehäuses gesorgt werden, um etwa den vorbeschriebenen Auslenkungsbereich für die Kolbenstange um die Mittelachse des Zylindergehäuses winkelmäßig auszurichten.

Es ist außerdem bevorzugt, wenn der Bodenabschnitt des Federtellers auf seiner von der Ringaussparung abgewandten Seite eine kreisringförmige, ebene Stirnfläche aufweist, mit der sich der Federteller in axialer Richtung des Zylindergehäuses an einer zugeordneten Ringschulter abstützt, die am Innenumfang des Zylindergehäuses ausgebildet ist. Dies entlastet die vorbeschriebene Schnappverbindung zwischen Federteller und Zylindergehäuse von Federkräften des Federelements, die vielmehr in klarer Funktionszuordnung über eine komplette bzw. geschlossene Ringfläche der Ringschülter am Zylindergehäuse abgestützt werden.

Im weiteren Verfolg des Erfindungsgedankens kann ferner der Federteller auf der von der Ringaussparung abgewandten Seite des Bodenabschnitts einen ringförmigen Zentriervorsprung aufweisen, um vorteilhaft weitere Funktionen im Federteller zu integrieren. So besitzt der Zentriervorsprung vorzugsweise eine konisch abgeschrägte Außenumfangsfläche, die - ggf. den Federteller bezüglich des Zylindergehäuses noch zentrierend - einer komplementär geformten Gegenfläche am Innenumfang des Zylindergehäuses gegenüberliegt. Während die konisch abgeschrägte Außenumfangsfläche des Zentriervorsprungs insbesondere ein automatisiertes Fügen des Federtellers zum Zylindergehäuse vereinfacht, dient die komplementär geformte Gegenfläche am Innenumfang des Zylindergehäuses vorteilhaft auch als Einführschräge für ein Dichtelement am Kolben, wenn die Kolbenbaugruppe zum Zylindergehäuse gefügt wird. Darüber hinaus kann der Zentriervorsprung des Federtellers eine konisch abgeschrägte Innenumfangsfläche aufweisen, gegen die eine komplementär geformte Gegenfläche am Außenumfang des Kolbens bei freigegebener Kolbenbaugruppe in Anlage bringbar ist, um die - in diesem Fall starr mit dem Kolben verbundene - Kolbenstange mit der Mittelachse des Zylindergehäuses im Wesentlichen auszufluchten. Diese Ausgestaltung vereinfacht zum einen bei der Erstmontage der Kolbenbaugruppe das Fügen des Federtellers zum Zylindergehäuse, wobei das an der Kolbenbaugruppe vormontierte Federelement den Federteller gegen den Kolben spannt und dabei den Federteller infolge der Anlage der konisch abgeschrägten Innenumfangsfläche des Zentriervorsprungs an der komplementär geformten Gegenfläche am Außenumfang des Kolbens bezüglich der Kolbenstange senkrecht stellt bzw. hält. Zum anderen ist es so im zusammengebauten Zustand des Hydraulikzylinders möglich, den Kolben mittels des Federelements gegen den am Zylindergehäuse befestigten Federteller zu spannen, um die Kolbenstange aufgrund der Anlage der konisch abgeschrägten Gegenfläche am Außenumfang des Kolbens an der komplementär geformten Innenumfangsfläche des Zentriervorsprungs des Federtellers bezüglich des Zylindergehäuses gerade zu stellen bzw. zu halten, was z.B. im Falle eines Austauschs des Hydraulikzylinders dessen Montage vereinfacht.

In einer ebenfalls besonders montagefreundlichen Ausgestaltung kann weiterhin das Federelement mit seinem kolbenfernen Ende am Kolbenstangenkopf über einen geschlitzten Gegenhalterring angreifen, der auf eine zugeordnete Trägerfläche am Kolbenstangenkopf aufgeschnappt ist und endseitig einen radial nach außen vorstehenden Ringbund aufweist, an dessen dem Kolben zugewandter Seite das kolbenferne Ende des Federelements anliegt, während sich der Ringbund auf seiner vom Kolben abgewandten Seite an einer am Kolbenstangenkopf ausgebildeten Ringschulter axial abstützt. Ein solcher geschlitzter und damit radial aufweitbarer Gegenhalterring kann bei der Vormontage des Federelements zur Kolbenbaugruppe nach einem Zusammenschieben des auf die Kolbenstange gesetzten Federelements gegen den sich am Kolben abstützenden Federteller und einem quer zu der somit seitlich zugänglichen Kolbenstange erfolgenden Aufklipsen des Gegenhalterrings auf der Kolbenstange problemlos axial über den vorbeschriebenen, im Querschnitt gesehen im Wesentlichen balligen Ringbund des Kolbenstangenkopfs zur Trägerfläche am Kolbenstangenkopf gefügt werden.

Grundsätzlich ist eine Ausgestaltung der Kolbenbaugruppe denkbar, bei der die Kolbenstange gelenkig am Kolben angebunden ist. Demgegenüber bevorzugt ist es indes, wenn der Kolben mit der Kolbenstange starr verbunden ist, wobei der Kolben eine Außenkontur aufweist, die ein Verkippen der Kolbenbaugruppe im Zylindergehäuse gestattet. Bei dieser Ausgestaltung erübrigt sich in vorteilhafter Weise der mit einer Gelenkverbindung zwischen Kolben und Kolbenstange verbundene Aufwand. Zudem ist ein Kolben mit "verkippfähiger", z.B. sphärischer Außenkontur weniger anfällig gegen Schmutz als ein zylindrischer Kolben, der mit einer Zylinderwandung des Zylindergehäuses einen schmalen Ringspalt bildet, in dem sich Verunreinigungen festsetzen können. Vorzugsweise ist hierbei der Kolben aus Kunststoff auf die ggf. metallische Kolbenstange aufgespritzt oder ggf. auch einstückig mit der Kolbenstange aus Kunststoff gespritzt, was beides einer einfachen und kostengünstigen Herstellung förderlich ist.

Des Weiteren kann die Ausgestaltung derart getroffen sein, dass der Kolben einen druckraumseitigen Fortsatz aufweist, auf dem vermittels eines Halterings ein Dichtelement zentriert gehalten ist, das mit einer umlaufenden Dichtlippe gleitfähig und dichtend an einer Lauffläche am Innenumfang des Zylindergehäuses anliegt, wobei der Haltering auf seiner vom Dichtelement abgewandten Seite mit einer ausgesteiften Verlängerung versehen ist, die hinsichtlich ihrer Länge und/oder ihres Durchmessers angepasst ist, bei einem Verkippen der Kolbenbaugruppe im Zylindergehäuse dann an der Lauffläche des Zylindergehäuses zur Anlage zu gelangen, um die Kolbenbaugruppe am Zylindergehäuse abzustützen, wenn ein vorbestimmter Verkippwinkel der Kolbenbaugruppe gegenüber der Mittelachse des Zylindergehäuses erreicht ist. Somit wird - beispielsweise bei Demontage des Hydraulikzylinders in einer Werkstatt - mit einfachen Maßnahmen ein Lecken des Hydraulikzylinders infolge einer übermäßigen Verformung des Dichtelements verhindert, welches ansonsten dazu führen könnte, dass der Hydraulikzylinder fälschlicherweise als defekt angesehen und in der Folge zeitaufwendig und kostenträchtig ausgetauscht wird.

Prinzipiell kann der Haltering hierbei mittels einer Schweiß-oder Klebeverbindung am Fortsatz des Kolbens angebracht sein. Demgegenüber im Hinblick auf eine einfache und kostengünstige Montage bevorzugt ist es indes, wenn der Haltering mittels einer Schnappverbindung am Fortsatz des Kolbens befestigt ist, die insbesondere einfach in Kunststoff ausgebildet werden kann. Zur Befestigung des Halterings am Kolbenfortsatz sind andere Formschlussverbindungen, ggf. in Kombination mit Kraftschluss, wie eine Schraubverbindung, schließlich auch denkbar.

### KURZE BESCHREIBUNG DER ZEICHNUNGEN

Im Folgenden wird die Erfindung anhand eines bevorzugten Ausführungsbeispiels unter Bezugnahme auf die beigefügten, teilweise schematischen Zeichnungen näher erläutert, in denen elastomere Teile zur Vereinfachung der Darstellung im unverformten Zustand gezeigt sind. In den Zeichnungen zeigen:

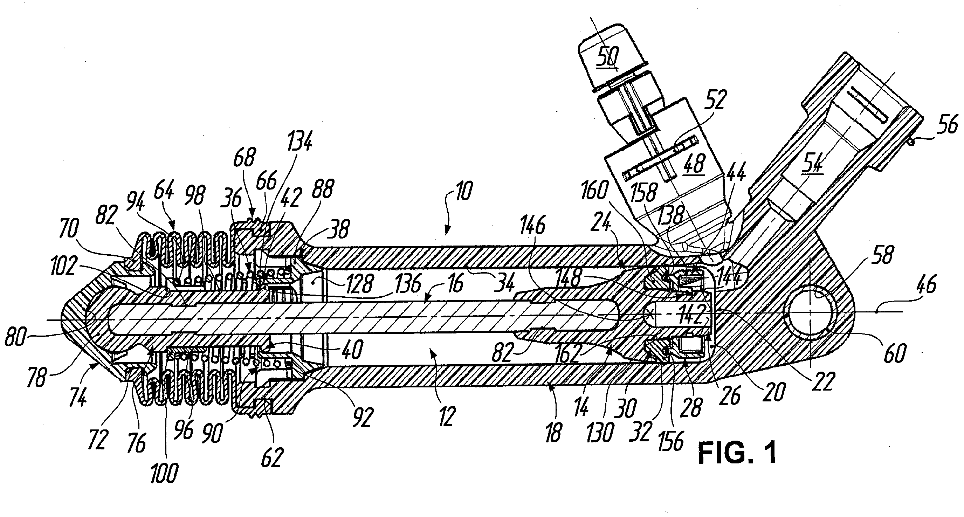

- Fig. 1: eine entlang einer Mittelachse bis auf einen Entlüf-teranschluss aufgebrochene Seitenansicht eines erfin-dungsgemäß ausgebildeten Nehmerzylinders für eine hydraulische Kupplungsbetätigung für Kraftfahrzeuge im uneingebauten Zustand, dessen in einem Zylindergehäuse längsverschieblich aufgenommene Kolbenbaugruppe in einer vorbestimmten Hubstellung bezüglich des Zylin-dergehäuses dargestellt ist, in der die Kolbenbau-gruppe gegen die Kraft eines sich über einen Feder-teller am Zylindergehäuse abstützenden Federelements mittels eines am Federteller vorgesehenen Fixierab-schnitts lösbar gehalten ist, der hierzu mit einem Gegenabschnitt an einer Kolbenstange der Kolbenbau-gruppe zusammenwirkt;
- Fig. 2: eine gegenüber dem Maßstab von Fig. 1 vergrößerte, nach rechts abgebrochene, ansonsten aber der Fig. 1 entsprechende Darstellung des in Fig. 1 linken Endes des Nehmerzylinders gemäß Fig. 1, zur Veranschau-lichung weiterer Details zu den Maßnahmen für die tem-poräre Fesselung der Kolbenbaugruppe gegenüber dem Zylindergehäuse;
- Fig. 3: eine perspektivische Darstellung der vom Zylinderge-häuse getrennten Kolbenbaugruppe des Nehmerzylinders gemäß Fig. 1, mit einem an einem Kolbenstangenkopf montierten, geschlitzten Gegenhalterring für das Federelement;
- Fig. 4: eine gegenüber dem Maßstab von Fig. 1 vergrößerte, perspektivische Darstellung des vom Zylindergehäuse getrennten Federtellers des Nehmerzylinders gemäß Fig. 1 von schräg vorne;
- Fig. 5: eine Vorderansicht des Federtellers gemäß Fig. 4 im Maßstab von Fig. 4;
- Fig. 6: eine Längsschnittansicht des Federtellers gemäß Fig. 4 entsprechend der Schnittverlaufslinie VI-VI in Fig. 5;
- Fig. 7: eine Längsschnittansicht des Federtellers gemäß Fig. 4 entsprechend der Schnittverlaufslinie VII-VII in Fig. 5;
- Fig. 8: eine nach rechts abgebrochene, perspektivische Dar-stellung eines offenen Endes des Zylindergehäuses des Nehmerzylinders gemäß Fig. 1 von schräg vorne und im Maßstab der Fig. 4, ohne am Zylindergehäuse montierten Federteller;
- Fig. 9: eine nach rechts abgebrochene Längsschnittansicht des Zylindergehäuses von Fig. 8 im Bereich des offenen Endes, ohne am Zylindergehäuse montierten Federteller;
- Fig. 10: eine nach rechts abgebrochene, im Blickwinkel und im Maßstab der Fig. 8 entsprechende, perspektivische Dar-stellung des offenen Endes des Zylindergehäuses des Nehmerzylinders gemäß Fig. 1, mit dem am Zylinderge-häuse montierten Federteller gemäß Fig. 4;
- Fig. 11: eine nach links abgebrochene Längsschnittansicht eines an der Kolbenstange angebrachten Kolbens der Kolben-baugruppe des Nehmerzylinders gemäß Fig. 1 im Maßstab der Fig. 2, ohne Dichtelement und Haltering hierfür;
- Fig. 12: eine gegenüber dem Maßstab von Fig. 1 vergrößerte, perspektivische Darstellung des vom Kolben des Nehmer-zylinders gemäß Fig. 1 getrennten Halterings für das Dichtelement von schräg vorne;
- Fig. 13: eine Rückansicht des Halterings gemäß Fig. 12 im Maß-stab von Fig. 12;
- Fig. 14: eine Längsschnittansicht des Halterings gemäß Fig. 12 entsprechend der Schnittverlaufslinie XIV-XIV in Fig. 13; und
- Fig. 15: eine Längsschnittansicht des Halterings gemäß Fig. 12 entsprechend der Schnittverlaufslinie XV-XV in Fig. 13.

### DETAILLIERTE BESCHREIBUNG DES AUSFÜHRUNGSBEISPIELS

Gemäß Fig. 1 hat ein Nehmerzylinder 10 für eine hydraulische Kupplungsbetätigung für Kraftfahrzeuge eine Kolbenbaugruppe 12, die einen Kolben 14 und eine starr damit verbundene Kolbenstange 16 umfasst, sowie ein Zylindergehäuse 18, in dem ein Druckraum 20 ausgebildet ist, der auf der einen Seite (links in Fig. 1) variabel von dem längsverschieblich im Zylindergehäuse 18 aufgenommenen Kolben 14 und auf der anderen Seite (rechts in Fig. 1) fest von einem Boden 22 des Zylindergehäuses 18 begrenzt ist. Der im dargestellten Ausführungsbeispiel aus Kunststoff auf die Kolbenstange 16 aufgespritzte Kolben 14 hat hierbei eine Außenkontur 24, die ein Verkippen der Kolbenbaugruppe 12 im Zylindergehäuse 18 gestattet. Ferner besitzt der Kolben 14 einen druckraumseitigen Fortsatz 26, auf dem vermittels eines Halterings 28 ein Dichtelement 30 zentriert gehalten ist, das mit einer umlaufenden Dichtlippe 32 gleitfähig und dichtend an einer innenumfangsseitigen Lauffläche 34 des Zylindergehäuses 18 anliegt.

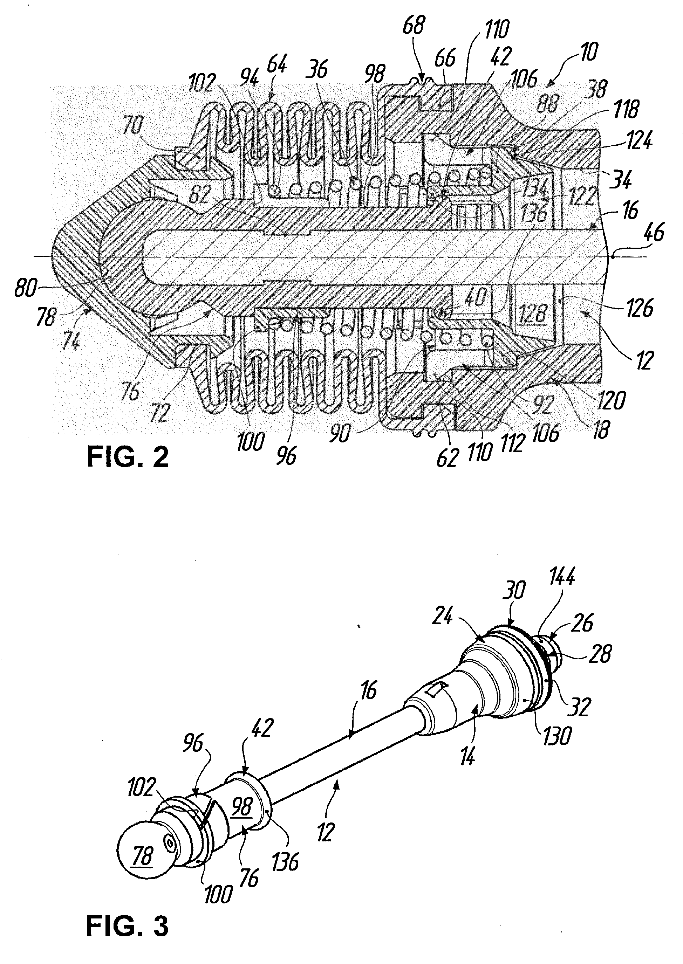

Auf der vom Druckraum 20 abgewandten Seite des Kolbens 14 ist ein Federelement 36 angeordnet, das sich einerseits an einem gehäuseseitigen Federteller 38 abstützt und andererseits mit der Kolbenstange 16 wirkverbunden ist, um die Kolbenbaugruppe 12 in einer vom Boden 22 des Zylindergehäuses 18 weggewandten Richtung vorzuspannen. Bei dem Federteller 38 handelt es sich ersichtlich um ein vom Zylindergehäuse 18 separates Teil. Des Weiteren ist ein Fixierabschnitt 40 vorgesehen, der die Kolbenbaugruppe 12 vor einer ersten Betätigung des Nehmerzylinders 10 in einer vorbestimmten Hubstellung bezüglich des Zylindergehäuses 18 fixiert, wie in den Fig. 1 und 2 gezeigt, und dazu ausgebildet ist, mit der ersten Betätigung des Nehmerzylinders 10 die Kolbenbaugruppe 12 gegenüber dem Zylindergehäuse 18 freizugeben, so dass die Kolbenstange 16 des Nehmerzylinders 10 bezüglich des Zylindergehäuses 18 des Nehmerzylinders 10 zur Vermeidung einer Überbefüllung der hydraulischen Kupplungsbetätigung, für den Transport des Nehmerzylinders 10 sowie zur Vereinfachung der Montage der Einheit im Kraftfahrzeug temporär gefesselt werden kann.

Wie nachfolgend unter Bezugnahme auf insbesondere die Fig. 2, 4 bis 7 und 10 noch näher beschrieben werden wird, ist der Fixierabschnitt 40 am Federteller 38 ausgebildet und wirkt zur lösbaren Fixierung der Kolbenbaugruppe 12 bezüglich des Zylindergehäuses 18 mit einem Gegenabschnitt 42 an der Kolbenstange 16 zusammen.

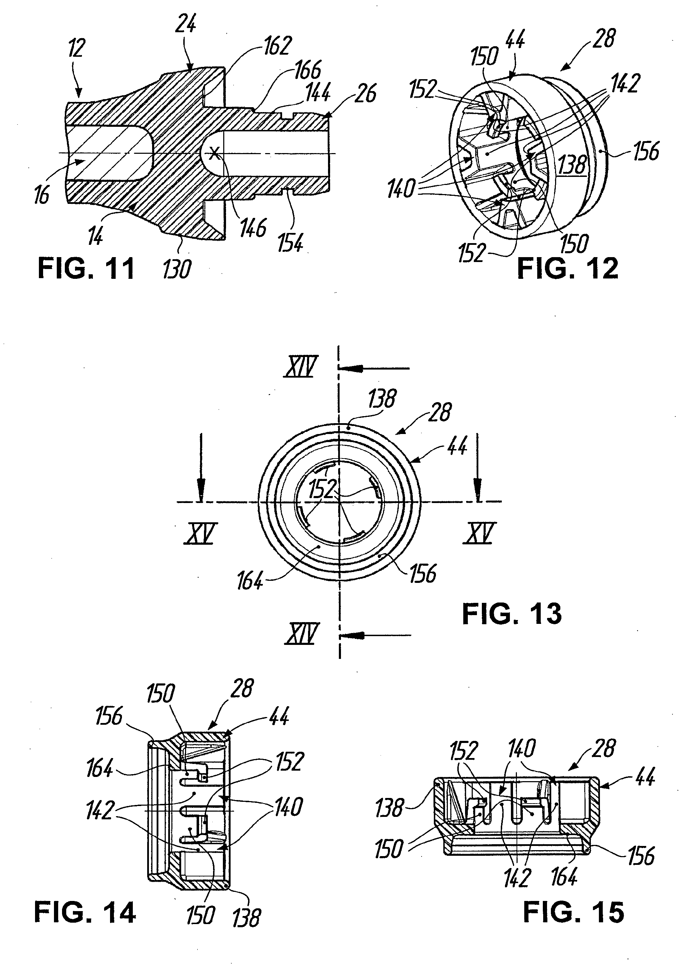

Darüber hinaus ist, wie im Folgenden insbesondere anhand der Fig. 11 bis 15 ebenfalls noch im Detail erläutert werden wird, der Haltering 28 auf seiner vom Dichtelement 30 abgewandten Seite mit einer ausgesteiften Verlängerung 44 versehen, die hinsichtlich ihrer Länge und/oder ihres Durchmessers angepasst ist, bei einem Verkippen der Kolbenbaugruppe 12 im Zylindergehäuse 18 dann an der Lauffläche 34 des Zylindergehäuses 18 zur Anlage zu gelangen, um die Kolbenbaugruppe 12 am Zylindergehäuse 18 abzustützen, wenn ein vorbestimmter Verkippwinkel der Kolbenbaugruppe 12 gegenüber der Mittelachse 46 des Zylindergehäuses 18, z.B. 5° erreicht ist, damit Undichtigkeiten zwischen der Dichtlippe 32 des Dichtelements 30 und der Lauffläche 34 im Zylindergehäuse 18 zuverlässig vermieden werden.

Gemäß Fig. 1 ist das im dargestellten Ausführungsbeispiel aus Kunststoff spritzgegossene Zylindergehäuse 18 des Nehmerzylinders 10 im Bereich des Bodens 22 mit zwei einstückig angeformten Anschlüssen versehen, die in dem Druckraum 20 an dessen in Fig. 1 rechten Ende münden. Bei diesen Anschlüssen handelt es sich zum einen um einen Entlüfteranschluss 48, in dem ein an sich bekannter Entlüfter 50 abgedichtet aufgenommen und mittels eines Sicherungselements 52 befestigt ist, und zum anderen um einen Druckanschluss 54, in den eine Druckleitung (nicht gezeigt) hydraulisch dicht mit einem Steckerteil einsteckbar und mittels eines weiteren Sicherungselements 56 festlegbar ist, um den Nehmerzylinder 10 in an sich bekannter Weise hydraulisch mit einem Kupplungsgeberzylinder (nicht dargestellt) zu verbinden. Zur Befestigung des Nehmerzylinders 10 an etwa einer Getriebewand (nicht gezeigt) weist das Zylindergehäuse 18 nahe dem Boden 22 ferner eine Befestigungsbohrung 58 auf, die mit einer geschlitzten Stahlbuchse 60 ausgekleidet bzw. verstärkt ist, durch die sich im montierten Zustand des Nehmerzylinders 10 z.B. eine Schraube (nicht dargestellt) als Befestigungsmittel hindurch erstreckt.

Am in Fig. 1 linken, offenen Ende des Zylindergehäuses 18 ist Letzteres außenumfangsseitig mit einer Radialnut 62 versehen, in die ein das Federelement 36 schützend umgebender, elastomerer Faltenbalg 64 mit einem innenumfangsseitigen Ringbund 66 eingeknüpft ist. Nicht gezeigte Befestigungsmittel halten den Ringbund 66 bei 68 (Angriffstelle für Befestigungsmittel) von radial außen in dieser Position. An seinem vom Zylindergehäuse 18 abgewandten Ende ist der Faltenbalg 64 mit einem weiteren innenumfangsseitigen Ringbund 70 versehen, der in eine Radialnut 72 eingeknüpft ist, die an einer Staubschutzkappe 74 ausgebildet ist. Die Staubschutzkappe 74, über welche die Kolbenstange 16 im im Kraftfahrzeug montierten Zustand des Nehmerzylinders 10 betätigungswirksam an einem Kupplungshebel (nicht gezeigt) angreift, ist in an sich bekannter Weise gegenüber der Kolbenstange 16 verschwenkbar an der Kolbenstange 16 angelenkt. Genauer gesagt hat die Kolbenstange 16 einen Kolbenstangenkopf 76 mit einem Kugelende 78, das formschlüssig in einen inneren Kugelkalottenabschnitt 80 der Staubschutzkappe 74 eingreift.

Wie der Kolben 14 ist im dargestellten Ausführungsbeispiel auch der Kolbenstangenkopf 76 aus Kunststoff auf die metallische Kolbenstange 16 aufgespritzt. An den Enden der stabförmigen Kolbenstange 16 ausgebildete Profilierungen - hier in der Form von Radialnuten 82, in die der Kunststoff eindringen kann - sorgen dabei für eine zug- und druckfeste Festlegung des Kolbenstangenkopfs 76 bzw. des Kolbens 14 an der Kolbenstange 16.

Innenumfangsseitig ist das Zylindergehäuse 18 an seinem offenen Ende vor der Lauffläche 34 insbesondere zur Aufnahme des Federtellers 38 mit zur Lauffläche 34 hin abnehmendem Durchmesser mehrfach gestuft und abgeschrägt, wie am besten in den Fig. 2, 8 und 9 zu sehen ist. Diese Stufen und Abschrägungen am Innenumfang des Zylindergehäuses 18 wirken mit komplementären Geometrien am Federteller 38 zusammen, wie nachfolgend noch näher beschrieben werden wird.

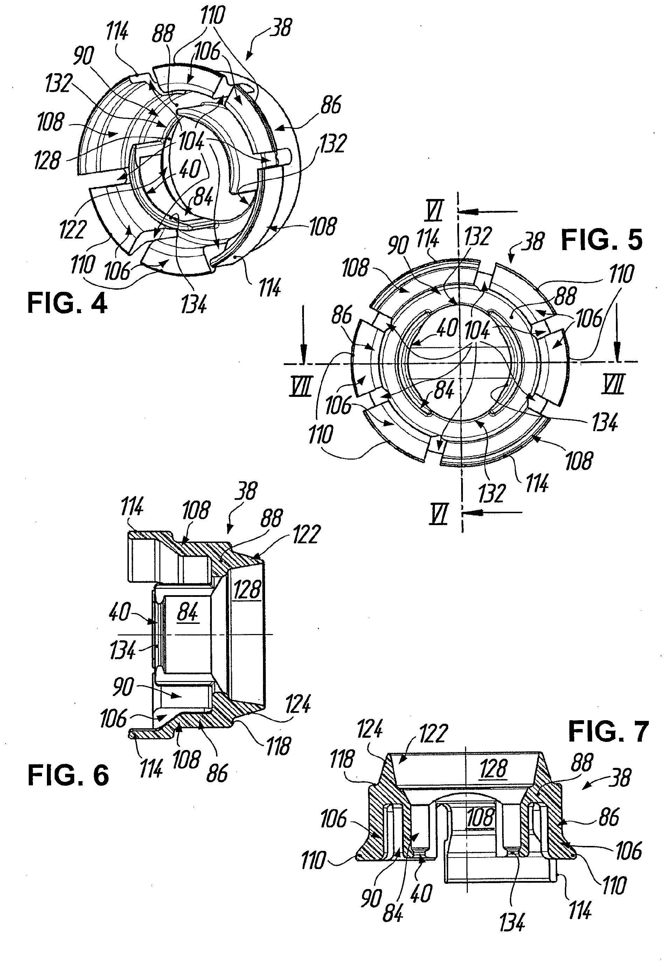

Weitere Einzelheiten des durch ein vom Zylindergehäuse 18 gesondertes Ringteil ausgebildeten Federtellers 38 sind insbesondere den Fig. 4 bis 7 und 10 zu entnehmen. Demgemäß umfasst der Federteller 38 allgemein einen Innenringabschnitt 84, durch den sich die Kolbenstange 16 hindurch erstreckt (siehe die Fig. 1 und 2), einen Außenringabschnitt 86, über den der Federteller 38 auf noch zu beschreibende Weise am Zylindergehäuse 18 befestigt ist, und einen Bodenabschnitt 88, der den Innenringabschnitt 84 und den Außenringabschnitt 86 verbindet. Hierbei begrenzen die vorgenannten Abschnitte 84, 86, 88 des Federtellers 38 eine Ringaussparung 90, die, wie die Fig. 1 und 2 zeigen, der Aufnahme eines kolbennahen, durchmessergrößten Endes 92 des Federelements 36 dienen, welches als im Wesentlichen konisch geformte Schraubendruckfeder ausgebildet ist.

Demnach stützt sich das Federelement 36 mit seinem in den Fig. 1 und 2 rechten, kolbennahen Ende 92 am Bodenabschnitt 88 des Federtellers 38 ab. Das in den Fig. 1 und 2 linke, durchmesserkleinste und kolbenferne Ende 94 des Federelements 36 hingegen greift am Kolbenstangenkopf 76 über einen geschlitzten Gegenhalterring 96 an. Der Gegenhalterring 96 ist auf eine zugeordnete Trägerfläche 98 am Kolbenstangenkopf 76 aufgeschnappt und weist endseitig einen radial nach außen vorstehenden Ringbund 100 auf, an dessen dem Kolben 14 zugewandter Seite das kolbenferne Ende 94 des Federelements 36 anliegt. Auf seiner vom Kolben 14 abgewandten Seite hingegen stützt sich der Ringbund 100 an einer am Kolbenstangenkopf 76 ausgebildeten Ringschulter 102 axial ab. Es ist ersichtlich, dass das sich über den Federteller 38 am Zylindergehäuse 18 abstützende Federelement 36 somit über den Kolbenstangenkopf 76 eine Kraft auf die Kolbenbaugruppe 12 ausübt, die in den Fig. 1 und 2 nach links wirkt und bestrebt ist, die Staubschutzkappe 74 nach links zu drücken und über die Kolbenstange 16 den Kolben 14 vom Boden 22 des Zylindergehäuses 18 wegzuziehen.

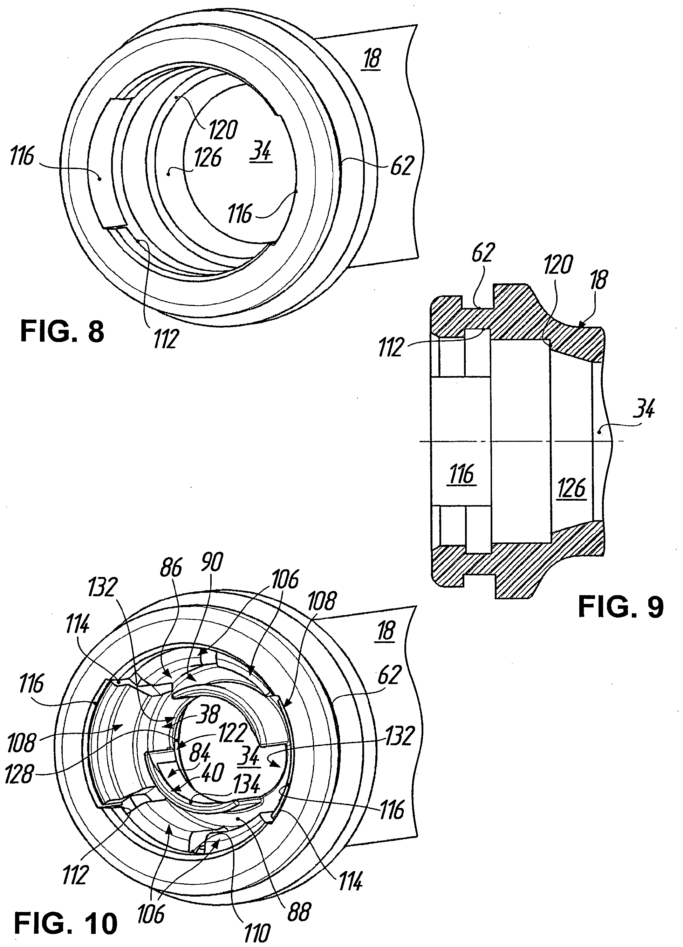

Gemäß insbesondere den Fig. 4 und 5 ist der Außenringabschnitt 86 des Federtellers 38 ausgehend von seinem freien Ende mit einer Mehrzahl von über dem Umfang verteilten, in Richtung des Bodenabschnitts 88 verlaufenden axialen Schlitzen 104 versehen. Die Schlitze 104 unterteilen den Außenringabschnitt 86 in verschiedene Segmente 106, 108, welche der Festlegung des Federtellers 38 am Zylindergehäuse 18 dienen. Hierbei bilden die Segmente 106 im dargestellten Ausführungsbeispiel vier Federarme, die gemäß insbesondere Fig. 7 an ihren freien Enden radial außen jeweils mit einem nasenartigen Vorsprung 110 versehen sind, welcher mit einer am Innenumfang des Zylindergehäuses 18 ausgebildeten Radialnut 112 eingreift, um den Federteller 38 in der Art einer Schnappverbindung am Zylindergehäuse 18 in axialer Richtung zu sichern. Die im dargestellten Ausführungsbeispiel zwei anderen, einander diametral gegenüberliegenden Segmente 108 des Außenringabschnitts 86 des Federtellers 38 hingegen weisen gemäß insbesondere den Fig. 4, 6, 7 und 10 an ihren freien Enden jeweils einen radial nach außen und axial vorstehenden, teilzylindrischen Endabschnitt 114 auf, der mit jeweils einer komplementären Aussparung 116 am Innenumfang des Zylindergehäuses 18 (siehe insbesondere die Fig. 8 und 10) formschlüssig eingreift, um den Federteller 38 gegen ein Verdrehen im Zylindergehäuse 18 zu sichern.

Wie ferner insbesondere den Fig. 2, 6 und 7 zu entnehmen ist, weist der Bodenabschnitt 88 des Federtellers 38 auf seiner von der Ringaussparung 90 abgewandten Seite eine kreisringförmige, ebene Stirnfläche 118 auf, mit der sich der Federteller 38 in axialer Richtung des Zylindergehäuses 18 an einer zugeordneten Ringschulter 120 abstützt, die am Innenumfang des Zylindergehäuses 18 ausgebildet ist. Radial innerhalb der kreisringförmigen Stirnfläche 118 ist am Federteller 38 auf der von der Ringaussparung 90 abgewandten Seite des Bodenabschnitts des Weiteren ein ringförmiger Zentriervorsprung 122 ausgebildet, wie wiederum am besten in den Fig. 2, 6 und 7 zu sehen ist. Der Zentriervorsprung 122 besitzt eine konisch abgeschrägte Außenumfangsfläche 124, die gemäß Fig. 2 einer komplementär geformten Gegenfläche 126 am Innenumfang des Zylindergehäuses 18 gegenüberliegt. Weiterhin weist der Zentriervorsprung 122 eine konisch abgeschrägte Innenumfangsfläche 128 auf, gegen die eine komplementär geformte Gegenfläche 130 am Außenumfang des Kolbens 14 (siehe die Fig. 1 und 3) bei von dem Fixierabschnitt 40 freigegebener Kolbenbaugruppe 12 in Anlage gebracht werden kann, um die Kolbenstange 16 mit der Mittelachse 46 des Zylindergehäuses 18 im Wesentlichen auszufluchten.

Wie weiterhin insbesondere die Fig. 4, 5 und 10 zeigen ist der Innenringabschnitt 84 des Federtellers 38 auf bezüglich der Mittelachse 46 des Zylindergehäuses 18 diametral gegenüberliegenden Seiten mit insgesamt zwei Aussparungen 132 versehen, die im dargestellten Ausführungsbeispiel den Innenringabschnitt 84 unterbrechen und in axialer Richtung bis zum Bodenabschnitt 88 des Federtellers 38 reichen. Die Aussparungen 132 gestatten im vom Fixierabschnitt 40 freigegebenen Zustand der Kolbenbaugruppe 12 eine definierte Auslenkung der Kolbenstange 16 gegenüber der Mittelachse 46 des Zylindergehäuses 18, nämlich dann, wenn die Kolbenstange 16 von einer bezüglich des Zylindergehäuses 18 im Wesentlichen mittigen Position in Richtung einer Aussparung 132 verschwenkt wird. Ansonsten begrenzt der Innenringabschnitt 84 des Federtellers 38 in Abhängigkeit von der Hubstellung des Kolbens 14 im Zylindergehäuse 18 die Auslenkung der Kolbenstange 16, wobei indes der Haltering 28 am Kolben 14 dafür sorgt, dass ein vorbestimmter Verkippwinkel der Kolbenbaugruppe 12 gegenüber der Mittelachse 46 des Zylindergehäuses 18 nie überschritten wird, wie weiter oben bereits erwähnt.

Schließlich weist der Innenringabschnitt 84 des Federtellers 38 an seinem freien Ende innenumfangsseitig einen den Fixierabschnitt 40 des Federtellers 38 ausbildenden, geringfügig radial auffederbaren Ringwulst 134 auf, der im hier dargestellten Ausführungsbeispiel von den Aussparungen 132 unterbrochen ist. Darüber hinaus ist der Kolbenstangenkopf 76 an seinem dem Kolben 14 zugewandten Ende außenumfangsseitig mit einem den vorerwähnten Gegenabschnitt 42 an der Kolbenstange 16 ausbildenden, im Querschnitt gesehen (vgl. Fig. 2) im Wesentlichen balligen Ringbund 136 versehen, der sich im fixierten Zustand der federvorgespannten Kolbenbaugruppe 12 an dem Ringwulst 134 des Federtellers 38 axial abstützt, um die Kolbenbaugruppe 12 im Zylindergehäuse 18 in der in den Fig. 1 und 2 gezeigten Stellung temporär zu fesseln.

Weitere Details zum Haltering 28 und zu dessen Befestigung am Fortsatz 26 des Kolbens 14 sind den Fig. 11 bis 15 zu entnehmen. Gemäß den Fig. 12, 14 und 15 weist die Verlängerung 44 des Halterings 28 einen im Wesentlichen hohlzylindrischen Außenabschnitt 138 auf, der sich über eine Mehrzahl von, im dargestellten Ausführungsbeispiel vier gleichmäßig über dem Innenumfang des Außenabschnitts 138 verteilten Aussteifungselementen 140 in radialer Richtung auf dem Fortsatz 26 des Kolbens 14 abstützt. Wie in Fig. 12 zu erkennen ist erstrecken sich die Aussteifungselemente 140 in axialer Richtung entlang des Außenabschnitts 138 und sind hohlkammerprofilartig mit jeweils einem im Wesentlichen trapezförmigen Querschnitt ausgebildet. Im montierten Zustand des Halterings 28 (siehe Fig. 1) liegen die Aussteifungselemente 140 jeweils mit ihrer radial inneren Schmalseite 142 an dem Fortsatz 26 des Kolbens 14, genauer dessen Außenumfangsfläche 144 an.

Erfolgt etwa im Zuge einer Demontage des Nehmerzylinders 10 von seinem Einbauort eine stärkere Auslenkung der Kolbenstange 16 und damit der gesamten Kolbenbaugruppe 12 relativ zur Mittelachse 46 des Zylindergehäuses 18, bei der der Kolben 14 um einen virtuellen Drehpunkt 146 etwa auf axialer Höhe des Dichtelements 30 verkippt, so stützt sich der Kolben 14 über die Außenumfangsfläche 144 seines Fortsatzes 26, die entsprechende(n) Schmalseite(n) 142 des Aussteifungselements 140 bzw. der Aussteifungselemente 140 des Halterings 28 und dessen Außenabschnitt 138, genauer dem vom Kolben 14 abgewandten, radial äußeren Ende des Außenabschnitts 138 an der Lauffläche 34 des Zylindergehäuses 18 ab, und zwar mit einem axialen Abstand zum virtuellen Drehpunkt 146 des Kolbens 14 und somit einem gewissen Hebelarm. Im Ergebnis wird eine übermäßige Verformung der gegen die Lauffläche 34 des Zylindergehäuses 18 drückenden Dichtlippe 32 des Dichtelements 30 und damit eine Leckage von Hydraulikfluid aus dem Druckraum 20 zuverlässig verhindert.

Wie des Weiteren der Fig. 1 zu entnehmen ist, ist der Haltering 28 mittels einer Schnappverbindung 148 am Fortsatz 26 des Kolbens 14 befestigt. Hierfür weist der Haltering 28 gemäß den Fig. 12 bis 15 eine Mehrzahl von, im dargestellten Ausführungsbeispiel insgesamt vier sich in axialer Richtung erstreckenden Federarmen 150 auf, die an ihren freien Enden radial innen jeweils mit einem nasenartigen Vorsprung 152 versehen sind, welcher mit einer am Außenumfang (Außenumfangsfläche 144) des Fortsatzes 26 ausgebildeten Radialnut 154 (siehe Fig. 11) eingreift. Wie am besten in Fig. 12 zu erkennen ist sind die Federarme 150 des Halterings 28 in Umfangsrichtung gesehen jeweils zwischen benachbarten Aussteifungselementen 140 des Halterings 28 angeordnet, so dass sich die Aussteifungselemente 140 und die Federarme 150 des Halterings 28 in axialer Richtung der Kolbenbaugruppe 12 gesehen etwa auf einer Höhe befinden.

Auf seiner dem Kolben 14 zugewandten Seite ist der Haltering 28 ferner mit einem ringförmigen Andruckvorsprung 156 versehen, der in eine ringförmige Axialnut 158 des Dichtelements 30 eingreift. Die Axialnut 158 trennt auf der vom Kolben 14 abgewandten Seite des Dichtelements 30 die Dichtlippe 32 von einem ringförmigen Befestigungsabschnitt 160 des Dichtelements 30, der auf dem Fortsatz 26 des Kolbens 14 in einer ringförmigen, zum Druckraum 20 hin offenen Axialnut 162 des Kolbens 14 sitzt.

Schließlich weist der Haltering 28 auf seiner dem Kolben 14 zugewandten Seite radial innerhalb des Andruckvorsprungs 156 noch eine kreisringförmige, ebene Stirnfläche 164 auf, über die der Haltering 28 in axialer Richtung des Kolbens 14 an einer zugeordneten Ringschulter 166 abstützbar ist, die gemäß Fig. 11 am Außenumfang des Fortsatzes 26 des Kolbens 14 ausgebildet ist, so dass ein Montageanschlag vorhanden ist, der eine Beschädigung des Dichtelements 30 und/oder der Schnapparme des Halterings 28 (Federarme 150 mit nasenartigen Vorsprüngen 152) bei der ggf. automatisierten Montage dieser Bauteile zuverlässig verhindert.

Ein Hydraulikzylinder, insbesondere Nehmerzylinder für eine hydraulische Kupplungsbetätigung für Kraftfahrzeuge umfasst eine einen Kolben und eine Kolbenstange aufweisende Kolbenbaugruppe, ein Zylindergehäuse, in dem ein Druckraum vorgesehen ist, der einerseits variabel von dem Kolben und andererseits fest von einem Boden des Zylindergehäuses begrenzt ist, ein auf der vom Druckraum abgewandten Seite des Kolbens angeordnetes Federelement, welches sich einerseits an einem gehäuseseitigen Federteller abstützt und andererseits mit der Kolbenstange wirkverbunden ist, um die Kolbenbaugruppe in einer Richtung weg vom Boden vorzuspannen, und einen Fixierabschnitt, der die Kolbenbaugruppe vor Erstbetätigung des Hydraulikzylinders in einer vorbestimmten Hubstellung bezüglich des Zylindergehäuses fixiert und dazu ausgebildet ist, mit der Erstbetätigung die Kolbenbaugruppe gegenüber dem Zylindergehäuse freizugeben. Der Fixierabschnitt ist in sehr kompakter und einfacher Ausgestaltung am Federteller ausgebildet und wirkt zur lösbaren Fixierung der Kolbenbaugruppe bezüglich des Zylindergehäuses mit einem Gegenabschnitt an der Kolbenstange zusammen.

### BEZUGSZEICHENLISTE

- 10: Hydraulikzylinder / Nehmerzylinder
- 12: Kolbenbaugruppe
- 14: Kolben
- 16: Kolbenstange
- 18: Zylindergehäuse
- 20: Druckraum
- 22: Boden
- 24 4: Außenkontur
- 26: Fortsatz
- 28: Haltering
- 30: Dichtelement
- 32: Dichtlippe
- 34: Lauffläche
- 36: Federelement
- 38: Federteller
- 40: Fixierabschnitt
- 42: Gegenabschnitt
- 44: Verlängerung
- 46: Mittelachse
- 48: Entlüfteranschluss
- 50: Entlüfter
- 52: Sicherungselement
- 54: Druckanschluss
- 56: Sicherungselement
- 58: Befestigungsbohrung
- 60: Stahlbuchse
- 62: Radialnut
- 64: Faltenbalg
- 66: Ringbund
- 68: Angriffstelle für Befestigungsmittel
- 70: Ringbund
- 72: Radialnut
- 74: Staubschutzkappe
- 76: Kolbenstangenkopf
- 78: Kugelende
- 80: Kugelkalottenabschnitt
- 82: Radialnut
- 84: Innenringabschnitt
- 86: Außenringabschnitt
- 88: Bodenabschnitt
- 90: Ringaussparung
- 92: kolbennahes Ende
- 94: kolbenfernes Ende
- 96: Gegenhalterring
- 98: Trägerfläche
- 100: Ringbund
- 102: Ringschulter
- 104: Schlitz
- 106: Segment
- 108: Segment
- 110: nasenartiger Vorsprung
- 112: Radialnut
- 114: Endabschnitt
- 116: Aussparung
- 118: Stirnfläche
- 120: Ringschulter
- 122: Zentriervorsprung
- 124: Außenumfangsfläche
- 126: Gegenfläche
- 128: Innenumfangsfläche
- 130: Gegenfläche
- 132: Aussparung
- 134: Ringwulst
- 136: Ringbund
- 138: Außenabschnitt
- 140: Aussteifungselement
- 142: Schmalseite
- 144: Außenumfangsfläche
- 146: virtueller Drehpunkt
- 148: Schnappverbindung
- 150: Federarm
- 152: nasenartiger Vorsprung
- 154: Radialnut
- 156: Andruckvorsprung
- 158: Axialnut
- 160: Befestigungsabschnitt
- 162: Axialnut
- 164: Stirnfläche
- 166: Ringschulter

## Patentansprüche

1. Hydraulikzylinder (10), insbesondere Nehmerzylinder für eine hydraulische Kupplungsbetätigung für Kraftfahrzeuge, mit
einer einen Kolben (14) und eine Kolbenstange (16) aufweisenden Kolbenbaugruppe (12),
einem Zylindergehäuse (18), in dem ein Druckraum (20) vorgesehen ist, der auf der einen Seite variabel von dem Kolben (14) und auf der anderen Seite fest von einem Boden (22) des Zylindergehäuses (18) begrenzt ist,
einem auf der vom Druckraum (20) abgewandten Seite des Kolbens (14) angeordneten Federelement (36), welches sich einerseits an einem vom Zylindergehäuse separaten gehäuseseitigen Federteller (38) des Hydraulikzylinders abstützt und andererseits mit der Kolbenstange (16) wirkverbunden ist, um die Kolbenbaugruppe (12) in einer vom Boden (22) des Zylindergehäuses (18) weggewandten Richtung vorzuspannen, und
einem Fixierabschnitt (40), der die Kolbenbaugruppe (12) vor einer ersten Betätigung des Hydraulikzylinders (10) in einer vorbestimmten Hubstellung bezüglich des Zylindergehäuses (18) fixiert und dazu ausgebildet ist, mit der ersten Betätigung des Hydraulikzylinders (10) die Kolbenbaugruppe (12) gegenüber dem Zylindergehäuse (18) freizugeben,
**dadurch gekennzeichnet, dass** der Fixierabschnitt (40) am Federteller (38) ausgebildet ist und zur lösbaren Fixierung der Kolbenbaugruppe (12) bezüglich des Zylindergehäuses (18) mit einem Gegenabschnitt (42) an der Kolbenstange (16) zusammenwirkt.

2. Hydraulikzylinder (10) nach Anspruch 1, **dadurch gekennzeichnet, dass** der Federteller (38) durch ein Ringteil ausgebildet ist, mit einem Innenringabschnitt (84), durch den sich die Kolbenstange (16) hindurch erstreckt, einem Außenringabschnitt (86), über den der Federteller (38) am Zylindergehäuse (18) befestigt ist, einem Bodenabschnitt (88), der den Innenringabschnitt (84) und den Außenringabschnitt (86) verbindet, sowie einer zwischen den vorgenannten Abschnitten (84, 86, 88) begrenzten Ringaussparung (90) zur Aufnahme eines kolbennahen Endes (92) des Federelements (36).

3. Hydraulikzylinder (10) nach Anspruch 2, **dadurch gekennzeichnet, dass** der Innenringabschnitt (84) an seinem freien Ende innenumfangsseitig einen den Fixierabschnitt (40) des Federtellers (38) ausbildenden, geringfügig radial auffederbaren Ringwulst (134) aufweist, während die Kolbenstange (16) einen Kolbenstangenkopf (76) hat, der außenumfangsseitig mit einem den Gegenabschnitt (42) an der Kolbenstange (16) ausbildenden, im Querschnitt gesehen im Wesentlichen balligen Ringbund (136) versehen ist, der sich im fixierten Zustand der Kolbenbaugruppe (12) an dem Ringwulst (134) axial abstützt.

4. Hydraulikzylinder (10) nach Anspruch 2 oder 3, **dadurch gekennzeichnet, dass** der Innenringabschnitt (84) auf bezüglich einer Mittelachse (46) des Zylindergehäuses (18) diametral gegenüberliegenden Seiten mit Aussparungen (132) versehen ist, die im freigegebenen Zustand der Kolbenbaugruppe (12) eine definierte Auslenkung der Kolbenstange (16) gegenüber der Mittelachse (46) des Zylindergehäuses (18) gestatten.

5. Hydraulikzylinder (10) nach einem der Ansprüche 2 bis 4, **dadurch gekennzeichnet, dass** der Außenringabschnitt (86) ausgehend von seinem freien Ende mit einer Mehrzahl von über dem Umfang verteilten, in Richtung des Bodenabschnitts (88) verlaufenden axialen Schlitzen (104) versehen ist, die den Außenringabschnitt (86) in Segmente (106, 108) unterteilen, welche der Festlegung des Federtellers (38) am Zylindergehäuse (18) dienen.

6. Hydraulikzylinder (10) nach Anspruch 5, **dadurch gekennzeichnet, dass** wenigstens ein Segment (106) einen Federarm bildet, der an seinem freien Ende radial außen mit einem nasenartigen Vorsprung (110) versehen ist, welcher mit einer am Innenumfang des Zylindergehäuses (18) ausgebildeten Radialnut (112) eingreift, um den Federteller (38) in der Art einer Schnappverbindung am Zylindergehäuse (18) in axialer Richtung zu sichern.

7. Hydraulikzylinder (10) nach Anspruch 5 oder 6, **dadurch gekennzeichnet, dass** wenigstens ein anderes Segment (108) an seinem freien Ende einen radial nach außen und axial vorstehenden, teilzylindrischen Endabschnitt (114) aufweist, der mit einer komplementären Aussparung (116) am Innenumfang des Zylindergehäuses (18) eingreift, um den Federteller (38) gegen ein Verdrehen im Zylindergehäuse (18) zu sichern.

8. Hydraulikzylinder (10) nach einem der Ansprüche 2 bis 7, **dadurch gekennzeichnet, dass** der Bodenabschnitt (88) auf seiner von der Ringaussparung (90) abgewandten Seite eine kreisringförmige, ebene Stirnfläche (118) aufweist, mit der sich der Federteller (38) in axialer Richtung des Zylindergehäuses (18) an einer zugeordneten Ringschulter (120) abstützt, die am Innenumfang des Zylindergehäuses (18) ausgebildet ist.

9. Hydraulikzylinder (10) nach einem der Ansprüche 2 bis 8, **dadurch gekennzeichnet, dass** der Federteller (38) auf der von der Ringaussparung (90) abgewandten Seite des Bodenabschnitts (88) einen ringförmigen Zentriervorsprung (122) aufweist.

10. Hydraulikzylinder (10) nach Anspruch 9, **dadurch gekennzeichnet, dass** der Zentriervorsprung (122) eine konisch abgeschrägte Außenumfangsfläche (124) besitzt, die einer komplementär geformten Gegenfläche (126) am Innenumfang des Zylindergehäuses (18) gegenüberliegt.

11. Hydraulikzylinder (10) nach Anspruch 9 oder 10, **dadurch gekennzeichnet, dass** der Zentriervorsprung (122) eine konisch abgeschrägte Innenumfangsfläche (128) aufweist, gegen die eine komplementär geformte Gegenfläche (130) am Außenumfang des Kolbens (14) bei freigegebener Kolbenbaugruppe (12) in Anlage bringbar ist, um die Kolbenstange (16) mit der Mittelachse (46) des Zylindergehäuses (18) im Wesentlichen auszufluchten.

12. Hydraulikzylinder (10) nach wenigstens dem Anspruch 3, **dadurch gekennzeichnet, dass** das Federelement (36) mit seinem kolbenfernen Ende (94) am Kolbenstangenkopf (76) über einen geschlitzten Gegenhalterring (96) angreift, der auf eine zugeordnete Trägerfläche (98) am Kolbenstangenkopf (76) aufgeschnappt ist und endseitig einen radial nach außen vorstehenden Ringbund (100) aufweist, an dessen dem Kolben (14) zugewandter Seite das kolbenferne Ende (94) des Federelements (36) anliegt, während sich der Ringbund (100) auf seiner vom Kolben (14) abgewandten Seite an einer am Kolbenstangenkopf (76) ausgebildeten Ringschulter (102) axial abstützt.

13. Hydraulikzylinder (10) nach einem der vorhergehenden Ansprüche, **dadurch gekennzeichnet, dass** der Kolben (14) mit der Kolbenstange (16) starr verbunden und vorzugsweise aus Kunststoff auf die Kolbenstange (16) aufgespritzt ist, wobei der Kolben (16) eine Außenkontur (24) aufweist, die ein Verkippen der Kolbenbaugruppe (12) im Zylindergehäuse (18) gestattet.

14. Hydraulikzylinder (10) nach Anspruch 13, **dadurch gekennzeichnet, dass** der Kolben (14) einen druckraumseitigen Fortsatz (26) aufweist, auf dem vermittels eines Halterings (28) ein Dichtelement (30) zentriert gehalten ist, das mit einer umlaufenden Dichtlippe (32) gleitfähig und dichtend an einer Lauffläche (34) am Innenumfang des Zylindergehäuses (18) anliegt, wobei der Haltering (28) auf seiner vom Dichtelement (30) abgewandten Seite mit einer ausgesteiften Verlängerung (44) versehen ist, die hinsichtlich ihrer Länge und/oder ihres Durchmessers angepasst ist, bei einem Verkippen der Kolbenbaugruppe (12) im Zylindergehäuse (18) dann an der Lauffläche (34) des Zylindergehäuses (18) zur Anlage zu gelangen, um die Kolbenbaugruppe (12) am Zylindergehäuse (18) abzustützen, wenn ein vorbestimmter Verkippwinkel der Kolbenbaugruppe (12) gegenüber der Mittelachse (46) des Zylindergehäuses (18) erreicht ist.

15. Hydraulikzylinder (10) nach Anspruch 14, **dadurch gekennzeichnet, dass** der Haltering (28) mittels einer Schnappverbindung (148) am Fortsatz (26) des Kolbens (14) befestigt ist.

## Claims

1. Hydraulic cylinder (10), particularly slave cylinder for a hydraulic actuating system for motor vehicles, comprising
a piston subassembly (12) comprising a piston (14) and a piston rod (16),
a cylinder housing (18) in which a pressure chamber (20) variably bounded at one side by the piston (14) and fixedly bounded at the other side by a base (22) of the cylinder housing (18) is provided,
a spring element (36) arranged at the side of the piston (14) remote from the pressure chamber (20), the spring element being supported at one end on a spring plate (38) of the hydraulic cylinder on the housing side which is separate from the cylinder housing, and operatively connected at the other end with the piston rod (16) so as to bias the piston subassembly (12) in a direction away from the base (22) of the cylinder housing (18), and
a fixing section (40) fixing the piston subassembly (12) in a predetermined stroke setting with respect to the cylinder housing (18) prior to first actuation of the hydraulic cylinder (10) and constructed to release the piston subassembly (12) relative to the cylinder housing (18) when first actuation of the hydraulic cylinder (10) takes place,
**characterized in that** the fixing section (40) is formed at the spring plate (38) and co-operates with a mating section (42) at the piston rod (16) for releasable fixing of the piston subassembly (12) with respect to the cylinder housing (18).

2. Hydraulic cylinder (10) according to claim 1, **characterized in that** the spring plate (38) is formed by an annular member with an inner annular section (84) through which the piston rod (16) extends, an outer annular section (86) by way of which the spring plate (38) is secured to the cylinder housing (18), a base section (88) connecting the inner annular section (84) and the outer annular section (86), and an annular recess (90) bounded between the aforesaid sections (84, 86, 88) for receiving a piston-adjacent end (92) of the spring element (36).

3. Hydraulic cylinder (10) according to claim 2, **characterized in that** the inner annular section (84) has at the free end thereof at the inner circumference an annular bead (134) which forms the fixing section (40) of the spring plate (38) and is capable of slight radial spring-back, whereas the piston rod (16) has a piston rod head (76) provided at the outer circumference with a substantially crowned annular collar (136) as seen in cross-section, which forms the mating section (42) at the piston rod (16) and which in the fixed state of the piston subassembly (12) is axially supported on the annular bead (134).

4. Hydraulic cylinder (10) according to claim 2 or 3, **characterized in that** the inner annular section (84) is provided with cut-outs (132) at sides which are diametrically opposite with respect to a center axis (46) of the cylinder housing (18), the cut-outs permitting a defined deflection of the piston rod (16) relative to the center axis (46) of the cylinder housing (18) in the released state of the piston subassembly (12).

5. Hydraulic cylinder (10) according to any one of claims 2 to 4, **characterized in that** the outer annular section (86) starting from the free end thereof is provided with a plurality of axial slots (104) which are distributed over the circumference and extend in the direction of the base section (88) and which divide the outer annular section (86) into segments (106, 108) serving to fix the spring plate (38) to the cylinder housing (18).

6. Hydraulic cylinder (10) according to claim 5, **characterized in that** at least one segment (106) forms a spring arm provided at the free end thereof radially outwardly with a lug-like protrusion (110) in engagement with a radial groove (112), which is formed at the inner circumference of the cylinder housing (18), to secure the spring plate (38) to the cylinder housing (18) in axial direction in the manner of a snap connection.

7. Hydraulic cylinder (10) according to claim 5 or 6, **characterized in that** at least one other segment (108) has at the free end thereof a radially outwardly and axially protruding part-cylindrical end section (114) in engagement with a complementary cut-out (116) at the inner circumference of the cylinder housing (18) to secure the spring plate (38) against turning in the cylinder housing (18).

8. Hydraulic cylinder (10) according to any one of claims 2 to 7, **characterized in that** the base section (88) has on the side thereof remote from the annular recess (90) a circularly annular planar end surface (118) by which the spring plate (38) is supported in axial direction of the cylinder housing (18) on an associated annular shoulder (120) formed at the inner circumference of the cylinder housing (18).

9. Hydraulic cylinder (10) according to any one of claims 2 to 8, **characterized in that** the spring plate (38) has an annular centering projection (122) at the side of the base section (88) remote from the annular recess (90).

10. Hydraulic cylinder (10) according to claim 9, **characterized in that** the centering projection (122) has a conically chamfered outer circumferential surface (124) opposite a mating surface (126) of complementary form at the inner circumference of the cylinder housing (18).

11. Hydraulic cylinder (10) according to claim 9 or 10, **characterized in that** the centering projection (122) has a conically chamfered inner circumferential surface (128) with which a mating surface (130) of complementary form at the outer circumference of the piston (14) can be brought into contact, when the piston subassembly (12) is released, so as to substantially align the piston rod (16) with the center axis (46) of the cylinder housing (18).

12. Hydraulic cylinder (10) according to at least claim 3, **characterized in that** the spring element (36) engages by the piston-distant end (94) thereof at the piston rod head (76) by way of a slotted retaining ring (96) which is snap-fitted on an associated support surface (98) at the piston rod head (76) and which has at an end a radially outwardly protruding annular collar (100), against the side of which facing the piston (14) the piston-distant end (94) of the spring element (36) bears, the annular collar (100) being axially supported at the side thereof remote from the piston (14) on an annular shoulder (102) formed on the piston rod head (76).

13. Hydraulic cylinder (10) according to any one of the preceding claims, **characterized in that** the piston (14) is rigidly connected with the piston rod (16) and is preferably injection-molded from plastics material on the piston rod (16), wherein the piston (14) has an outer contour (24) permitting tilting of the piston subassembly (12) in the cylinder housing (18).

14. Hydraulic cylinder (10) according to claim 13, **characterized in that** the piston (14) has an extension (26) which is at the pressure chamber side and on which a sealing element (30) is retained and centered by a retaining ring (28), the sealing element slidably and sealably bearing by an encircling sealing lip (32) against a sliding surface (34) at the inner circumference of the cylinder housing (18), wherein the retaining ring (28) is provided on the side thereof remote from the sealing element (30) with a stiffened prolongation (44) adapted with respect to the length and/or diameter thereof to come into contact with the sliding surface (34) of the cylinder housing (18) when tilting of the piston subassembly (12) in the cylinder housing (18) takes place, so as to support the piston subassembly (12) at the cylinder housing (18) when a predetermined tilt angle of the piston subassembly (12) relative to the center axis (46) of the cylinder housing (18) is reached.

15. Hydraulic cylinder (10) according to claim 14, **characterized in that** the retaining ring (28) is secured to the extension (26) of the piston (14) by a snap connection (148).

## Revendications

1. Vérin hydraulique (10), en particulier cylindre récepteur pour un actionnement d'embrayage hydraulique pour véhicules automobiles, comprenant
un ensemble à piston (12) comportant un piston (14) et une tige de piston (16),
un carter de vérin (18), dans lequel est prévue une chambre de pression (20), qui est délimitée sur une des faces de manière variable par le piston (14) et sur l'autre face de manière fixe par un fond (22) du carter de vérin (18),
un élément ressort (36) agencé sur la face du piston (14) opposée à la chambre de pression (20), lequel élément s'appuie d'une part sur une cuvette de ressort (38), côté carter, séparée du carter de vérin, du vérin hydraulique et est d'autre part en liaison fonctionnelle avec la tige de piston (16), afin de pré-contraindre l'ensemble à piston (12) dans une direction détournée du fond (22) du carter de vérin (18), et
une section de fixation (40), qui fixe l'ensemble à piston (12), avant un premier actionnement du vérin hydraulique (10), dans une position de levage prédéfinie par rapport au carter de vérin (18), et qui est conçue pour libérer l'ensemble à piston (12) par rapport au carter de vérin (18) lors du premier actionnement du vérin hydraulique (10),
**caractérisé en ce que** la section de fixation (40) est formée sur la cuvette de ressort (38) et, pour la fixation détachable de l'ensemble à piston (12) par rapport au carter de vérin (18), coopère avec une section complémentaire (42) sur la tige de piston (16).

2. Vérin hydraulique (10) selon la revendication 1, **caractérisé en ce que** la cuvette de ressort (38) est formée par une partie annulaire, comprenant une section annulaire intérieure (84), à travers laquelle s'étend la tige de piston (16), une section annulaire extérieure (86), par l'intermédiaire de laquelle la cuvette de ressort (38) est fixée au carter de vérin (18), une section de fond (88), qui relie la section annulaire intérieure (84) et la section annulaire extérieure (86), ainsi qu'un évidement annulaire (90) délimité entre les sections (84, 86, 88) précontraintes, destiné à recevoir une extrémité (92) proche du piston de l'élément ressort (36).

3. Vérin hydraulique (10) selon la revendication 2, **caractérisé en ce que** la section annulaire intérieure (84) présente à son extrémité libre côté périphérie intérieure un bourrelet annulaire (134) formant la section de fixation (40) de la cuvette à ressort (38) et se détendant légèrement radialement, tandis que la tige de piston (16) présente une tête de tige de piston (76), qui est pourvue côté périphérie extérieure d'un collet annulaire (136) sensiblement bombé vu en section transversale, formant la section complémentaire (42) sur la tige de piston (16), lequel collet s'appuie axialement contre le bourrelet annulaire (134) une fois l'ensemble à piston (12) fixé.

4. Vérin hydraulique (10) selon la revendication 2 ou 3, **caractérisé en ce que** la section annulaire intérieure (84) est pourvue sur les faces diamétralement opposées par rapport à un axe central (46) du carter de vérin (18) d'évidements (132), qui permettent, une fois l'ensemble à piston (12) libéré, une déviation définie de la tige de piston (16) par rapport à l'axe central (46) du carter de vérin (18).

5. Vérin hydraulique (10) selon l'une quelconque des revendications 2 à 4, **caractérisé en ce que** la section annulaire extérieure (86) est pourvue, à partir de son extrémité libre, d'une pluralité de fentes (104) axiales réparties sur la périphérie, s'étendant en direction de la section de fond (88), lesquelles divisent la section annulaire extérieure (86) en segments (106, 108), lesquels servent à fixer la cuvette de ressort (38) au carter de vérin (18).

6. Vérin hydraulique (10) selon la revendication 5, **caractérisé en ce qu'**au moins un segment (106) forme un bras de ressort, qui est pourvu à son extrémité libre radialement à l'extérieur d'une partie saillante (110) du type taquet, laquelle s'insère par une rainure radiale (112) formée sur la périphérie intérieure du carter de vérin (18), afin de bloquer la cuvette de ressort (38) sur le carter de vérin (18) dans la direction axiale à la façon d'une liaison par encliquetage.

7. Vérin hydraulique (10) selon la revendication 5 ou 6, **caractérisé en ce qu'**au moins un autre segment (108) présente à son extrémité libre une section d'extrémité (114) en partie cylindrique, faisant saillie axialement et radialement vers l'extérieur, laquelle section s'insère par un évidement complémentaire (116) sur la périphérie intérieure du carter de vérin (18), afin d'empêcher la cuvette de ressort (38) de tourner dans le carter de vérin (18).

8. Vérin hydraulique (10) selon l'une quelconque des revendications 2 à 7, **caractérisé en ce que** la section de fond (88) présente sur sa face opposée à l'évidement annulaire (90) une surface frontale (118) plate en forme d'anneau circulaire, par laquelle la cuvette de ressort (38) s'appuie dans la direction axiale du carter de vérin (18) contre un épaulement annulaire (120) associé, qui est formé sur la périphérie intérieure du carter de vérin (18).

9. Vérin hydraulique (10) selon l'une quelconque des revendications 2 à 8, **caractérisé en ce que** la cuvette de ressort (38) présente sur la face de la section de fond (88), laquelle face est opposée à l'évidement annulaire (90), une partie saillante de centrage annulaire (122).

10. Vérin hydraulique (10) selon la revendication 9, **caractérisé en ce que** la partie saillante de centrage (122) possède une surface périphérique extérieure (124) biseautée de manière conique, qui est opposée à une surface complémentaire (126) formée de manière complémentaire sur la périphérie intérieure du carter de vérin (18).

11. Vérin hydraulique (10) selon la revendication 9 ou 10, **caractérisé en ce que** la partie saillante de centrage (122) présente une surface périphérique intérieure (128) biseautée de manière conique, contre laquelle une surface complémentaire (130) formée de manière complémentaire peut être amenée en appui sur la périphérie extérieure du piston (14) lorsque l'ensemble à piston (12) est libéré, afin d'aligner sensiblement la tige de piston (16) sur l'axe central (46) du carter de vérin (18).

12. Vérin hydraulique (10) selon au moins la revendication 3, **caractérisé en ce que** l'élément ressort (36) agit par son extrémité (94) opposée au piston sur la tête de tige de piston (76) par l'intermédiaire d'une bague de retenue complémentaire (96) fendue, qui est encliquetée sur une surface de support (98) associée sur la tête de tige de piston (76) et présente côté extrémité un collet radial (100) faisant saillie radialement vers l'extérieur, contre la face duquel, laquelle face est tournée vers le piston (14), s'applique l'extrémité (94) éloignée du piston de l'élément ressort (36), tandis que le collet annulaire (100) s'appuie axialement, sur sa face opposée au piston (14), contre un épaulement annulaire (102) formé sur la tête de tige de piston (76).

13. Vérin hydraulique (10) selon l'une quelconque des revendications précédentes, **caractérisé en ce que** le piston (14) est relié rigidement à la tige de piston (16) et est injecté de préférence à partir de matière plastique sur la tige de piston (16), le piston (16) présentant un contour extérieur (24) qui permet un basculement de l'ensemble à piston (12) dans le carter de vérin (18).

14. Vérin hydraulique (10) selon la revendication 13, **caractérisé en ce que** le piston (14) présente un prolongement (26) côté chambre de pression, sur lequel un élément d'étanchéité (30) est retenu centré au moyen d'une bague de retenue (28), lequel élément s'applique par une lèvre d'étanchéité (32) périphérique de manière coulissante et étanche contre une surface de roulement (34) sur la périphérie intérieure du carter de vérin (18), la bague de retenue (28) étant pourvue sur sa face opposée à l'élément d'étanchéité (30) d'un prolongement (44) renforcé, qui est adapté du point de vue de sa longueur et/ou de son diamètre, lors d'un basculement de l'ensemble à piston (12) dans le carter de vérin (18), pour parvenir alors en appui sur la surface de roulement (34) du carter de vérin (18), afin de soutenir l'ensemble à piston (12) sur le carter de vérin (18), lorsqu'un angle de basculement prédéfini de l'ensemble à piston (12) par rapport à l'axe central (46) du carter de vérin (18) est atteint.

15. Vérin hydraulique (10) selon la revendication 14, **caractérisé en ce que** la bague de retenue (28) est fixée au moyen d'une liaison par encliquetage (148) au prolongement (26) du piston (14).
